# EUROPEAN PATENT SPECIFICATION

(11) **EP 3 718 787 B1**
(45) Date of publication and mention of the grant of the patent: **23.02.2022**
(21) Application number: 20165362.3
(22) Date of filing: 24.03.2020
(51) Int. Cl.: B60C 11/03, B60C 11/12

(54) **TIRE**
REIFEN
PNEUMATIQUE

(30) Priority: 03.04.2019 JP 2019071438; 03.04.2019 JP 2019071446; 03.04.2019 JP 2019071445
(43) Date of publication of application: 07.10.2020
(73) Proprietor: Sumitomo Rubber Industries, Ltd., Kobe-shi, Hyogo-ken 651-0072 (JP)
(72) Inventor: ONITSUKA, Rena, Kobe-shi,, Hyogo 651-0072 (JP); FUJITA, Masayuki, Kobe-shi,, Hyogo 651-0072 (JP)
(74) Representative: Manitz Finsterwald Patent- und Rechtsanwaltspartnerschaft mbB

(56) References cited:
- EP-A1- 2 554 405
- EP-A1- 3 118 025
- EP-A1- 3 260 309
- EP-A1- 3 594 022

## Description

### Technical field

The present invention relates to a tire, more particularly to a tire of which tread portion is axially divided into three land portions by two circumferential main grooves.

### Background art

Conventionally, there have been proposed various tires in which a tread portion is axially divided into three land portions by main grooves. For example, a tread portion of a pneumatic tire disclosed in JP 2015-024797 A includes a center land portion defined between a pair of center main grooves, and a pair of shoulder land portions disposed on the axially outer sides of the center land portion.

Another tire provided with three land portions is known from EP 3 594 022 A1. EP 3 118 025 A1 discloses a tire according to the preamble of claim 1 and provided with four land portions. Another tire is disclosed in EP 3 260 309 A1.

### Summary of the Invention

### Problems to be solved by the invention

Generally, in a tire of which tread portion is divided into three land portions by main grooves, the width of each land portion in the tire axial direction becomes relatively large. For this reason, in such tire, the rigidity of each land portion becomes high, and the ride comfort tends to be impaired.

On the other hand, in order to reduce the rigidity of a land portion and thereby improve the ride comfort, it is conceivable to provide lateral grooves in the land portion.

However, such lateral grooves provided in the land portion generate various noises when the groove edges contact with the ground, and thus tend to impair the noise performance.

The present invention has been devised in view of the above situation, and a primary objective of the present invention is to provide a tire whose tread portion is axially divided into three land portions by circumferential main grooves and which can exhibit excellent ride comfort without sacrificing noise performance.

According to the present invention, a tire comprises a tread portion having a first tread edge and a second tread edge, the tread portion provided with two main grooves extending continuously in the tire circumferential direction to axially divide the tread portion into three land portions, wherein the two main grooves are a first main groove disposed between the tire equator and the first tread edge, and a second main groove disposed between the tire equator and the second tread edge, and the three land portions include a crown land portion between the first main groove and the second main groove,
wherein
the crown land portion is provided with a plurality of transverse narrow grooves crossing the crown land portion, and a plurality of non-transverse narrow grooves each extending from one of the two main grooves and not crossing the crown land portion.

It is preferable that the groove width of each of the transverse narrow grooves and the non-transverse narrow grooves measured at a ground contact surface of the crown land portion is not more than 3.0 mm.

It is preferable that each of the transverse narrow groove comprises a narrow portion whose width is not more than 1.5 mm in its cross section perpendicular to the longitudinal direction thereof, and a radially outer wide portion whose width is larger than that of the narrower portion and which extends radially outwardly from the narrow portion to open at the ground contact surface of the crown land portion.

The non-transverse narrow grooves each comprise a first portion extending from the above-said one of the two main grooves along the transverse narrow grooves, and a second portion bent and extending from the first portion and connected to one of the transverse narrow grooves.

It is preferable that said first portion comprises a narrow portion whose width is not more than 1.5 mm in its cross section perpendicular to the longitudinal direction thereof, and a radially outer wide portion whose width is larger than that of the narrower portion and which extends radially outwardly from the narrow portion to open at the ground contact surface of the crown land portion.

It is preferable that the first portion includes a shallow portion where the groove bottom is raised in its end portion connected to the above-said one of the two main grooves.

It is preferable that the transverse narrow grooves each comprise a first shallow portion, a second shallow portion, and a deep portion therebetween whose depth is greater than depths of the first shallow portion and the second shallow portion.

It is preferable that the non-transverse narrow grooves include first non-transverse narrow grooves extending from the first main groove, and second non-transverse narrow grooves extending from the second main groove.

It is preferable that the first non-transverse narrow grooves are adjacent to the respective transverse narrow grooves on their respective one sides in the tire circumferential direction, and
the second non-transverse narrow grooves are adjacent to the respective transverse narrow grooves on their respective other sides in the tire circumferential direction.

It is preferable that the first non-transverse narrow grooves are adjacent to the respective transverse narrow grooves and connected thereto on their respective one sides in the tire circumferential direction, and
the second non-transverse narrow grooves are adjacent to the respective transverse narrow grooves and connected thereto on their respective other sides in the tire circumferential direction.

It is preferable that each of the second non-transverse narrow grooves comprises a first portion extending along the transverse narrow grooves, and a second portion bent and extending from the first portion and extending to the transverse narrow groove to which the second non-transverse narrow groove is connected.

It is preferable that a position of the tire when mounted on a vehicle is specified such that the first tread edge is located outward of the vehicle and the second tread edge is located inward of the vehicle,
the three land portions include a first shoulder land portion between the first tread edge and the first main groove, and a second shoulder land portion between the second tread edge and the second main groove,
a land ratio of the first shoulder land portion is larger than a land ratio of the second shoulder land portion, and
the second shoulder land portion is provided with a plurality of second shoulder lateral grooves extending from the second tread edge and terminated within the second shoulder land portion, and
a plurality of longitudinal narrow grooves extending in the tire circumferential direction and connected to the second shoulder lateral grooves.

It is preferable that the width in the tire axial direction of the first shoulder land portion is larger than the width in the tire axial direction of the second shoulder land portion.

It is preferable that the longitudinal narrow grooves are each connected to two of the second shoulder lateral grooves adjacent to each other in the tire circumferential direction.

It is preferable that the second shoulder land portion is provided with a plurality of second shoulder narrow grooves extending from the second tread edge to the second main groove.

It is preferable that the second shoulder narrow grooves intersect the respective longitudinal narrow grooves.

It is preferable that each of the second shoulder narrow grooves is provided with a shallow portion where the groove bottom is raised in its second main groove side than the longitudinal narrow grooves.

It is preferable that the above-said shallow portion is disposed at an end on the second main groove side of the second shoulder narrow groove.

It is preferable that each of the second shoulder narrow grooves comprises a narrow portion whose width is not more than 1.5 mm in its cross section perpendicular to the longitudinal direction thereof, and a radially outer wide portion whose width is larger than that of the narrower portion and which extends radially outwardly from the narrow portion to open at the ground contact surface of the second shoulder land portion.

### Brief description of the drawings

Fig. 1 is a developed view of a tread portion of a tire as an embodiment of the present invention.
Fig. 2 is an enlarged view of the crown land portion of Fig. 1.
Fig. 3 is a cross-sectional view taken along line A-A of Fig. 2.
Fig. 4 is a cross-sectional view taken along line B-B of Fig. 2.
Fig. 5 is a cross-sectional view taken along line C-C of Fig. 2.
Fig. 6 is a cross-sectional view taken along line D-D of Fig. 2.
Fig. 7 is an enlarged view of the first shoulder land portion shown in Fig. 1.
Fig. 8 is a cross-sectional view taken along line E-E of Fig. 7.
Fig. 9 is an enlarged view of the second shoulder land portion shown in Fig. 1.
Fig. 10 is a cross-sectional view taken along line F-F of Fig. 9.
Fig. 11 is a developed view of the tread portion of a tire as another embodiment of the present invention.
Fig. 12 is an enlarged view of a crown land portion of a comparative example.
Fig. 13 is a cross-sectional view of a transverse narrow groove of a reference example 1.
Fig. 14 is an enlarged view of the 2nd shoulder land portion of a reference example 2.

### Description of the Preferred Embodiments

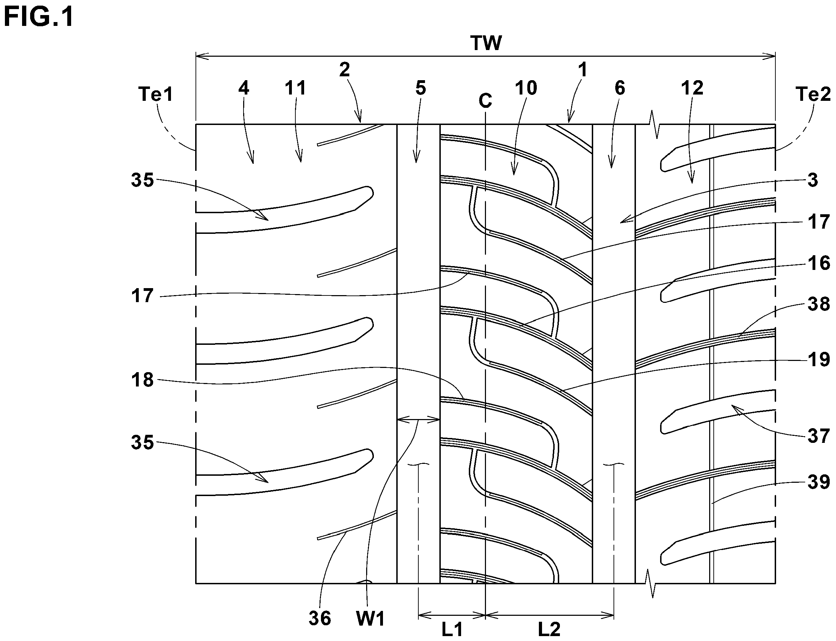

Embodiments of the present invention will now be described in detail in conjunction with accompanying drawings. Fig. 1 is a developed view of a tread portion 2 of a tire 1 showing an embodiment of the present invention.

The present invention can be applied to various tires, for example, pneumatic tires as well as non-pneumatic tires such as so-called airless tires, for various vehicles, for example, passenger cars, heavy-duty vehicles such as truck/bus and the like. However, the present invention is suitably applied to a pneumatic tire for passenger cars.

In the present embodiment, the tire 1 is a pneumatic tire for passenger cars.

In the present embodiment, as shown in Fig. 1, an intended position of the tire 1 when mounted on a vehicle is specified although the tire according to the present invention is not to be limited to such embodiment.

The intended position (namely, which side of the tire is to be positioned outward of the vehicle) is indicated by, for example, characters or symbols on the sidewall portions (not shown) of the tire. Thus, the tread portion 2 of the tire 1 has a first tread edge Te1 and a second tread edge Te2 to be located outward and inward, respectively, of the vehicle when the tire 1 is mounted on the vehicle.

The first tread edges Te1 and the first tread edges Te2 are the axial outermost edges of the ground contacting patch of the tire which occurs when the camber angle of the tire is zero (under a normally inflated loaded condition of the tire in the case of a pneumatic tire).

The tread width TW is the axial distance between the tread edges Te1 and Te2 (measured under a normally inflated unloaded condition of the tire in the case of a pneumatic tire).

The normally inflated unloaded condition is such that the tire is mounted on a standard wheel rim and inflate to a standard pressure but loaded with no tire load.

The normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The standard pressure and the standard tire load are the maximum air pressure and the maximum tire load for the tire specified by the same organization in the Air-pressure/Maximum-load Table or similar list.

For example, the standard wheel rim is the "standard rim" specified in JATMA, the "Measuring Rim" in ETRTO, the "Design Rim" in TRA or the like.

The standard pressure is the "maximum air pressure" in JATMA, the "Inflation Pressure" in ETRTO, the maximum pressure given in the "Tire Load Limits at Various Cold Inflation Pressures" table in TRA or the like.

The standard load is the "maximum load capacity" in JATMA, the "Load Capacity" in ETRTO, the maximum value given in the above-mentioned table in TRA or the like.

In this application including specification and claims, various dimensions, positions and the like of the pneumatic tire refer to those under the normally inflated unloaded condition of the tire unless otherwise noted.

The tread portion 2 is provided, between the first tread edge Te1 and the second tread edge Te2, with two main grooves 3 continuously extending in the tire circumferential direction to axially divide the tread portion 2 into three land portions 4.

In order to discharge water on the road surface to the rear of the tire, the main grooves 3 extend continuously in the tire circumferential direction with a relatively large width and a relatively large depth.

The main grooves 3 each have a groove width larger than 3.0 mm. Preferably, the groove width of each main groove 3 is 5 mm or more, more preferably 6 mm or more.

The groove widths W1 of the main grooves 3 are, for example, 5.0% to 8.0% of the tread width TW.

The depths of the main grooves 3 are, for example, 5 to 12 mm.

In the present embodiment, each main groove 3 is a straight groove extending linearly along the tire circumferential direction.

In other embodiments, each main groove 3 may be a non-linear groove, for example, a zigzag groove or a wavy groove.

The main grooves 3 are a first main groove 5 disposed between the tire equator C and the first tread edge Te1, a second main groove 6 disposed between the tire equator C and the second tread edge Te2.

The distance L1 in the tire axial direction from the tire equator C to the groove center line of the first main groove 5, and the distance L2 in the tire axial direction from the tire equator C to the groove center line of the second main groove 6 are preferably set in a range from 0.08 to 0.25 times the tread width TW, for example.

In the present embodiment, the distance L1 is smaller than the distance L2.

The land portions 4 are a crown land portion 10, a first shoulder land portion 11, and a second shoulder land portion 12. The crown land portion 10 is defined between the first main groove 5 and the second main groove 6.

The first shoulder land portion 11 is defined between the first main groove 5 and the first tread edge Te1.

The second shoulder land portion 12 is defined between the second main groove 6 and the second tread edge Te2.

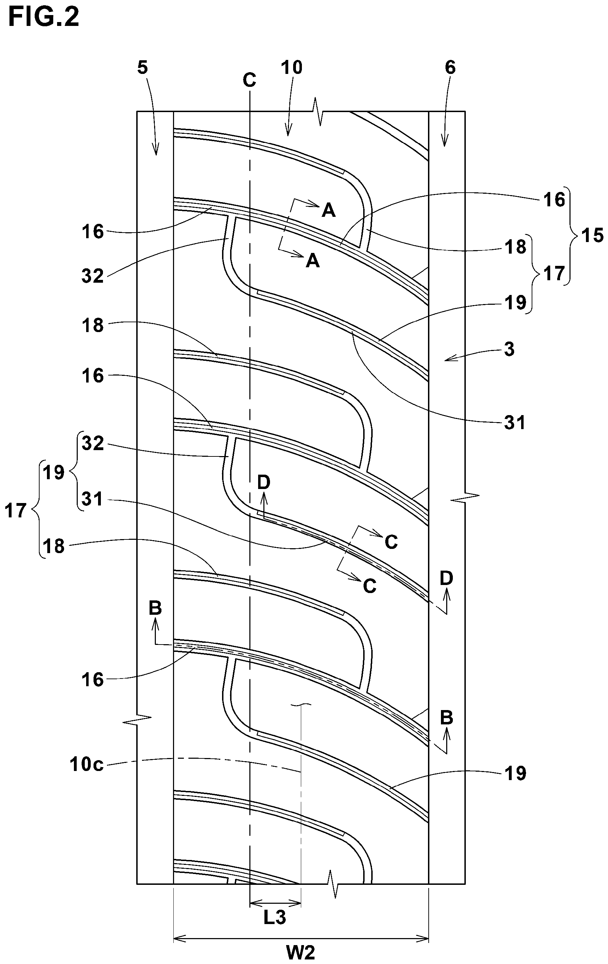

Fig. 2 shows an enlarged view of the crown land portion 10. As shown in Fig. 2, the width W2 of the crown land portion 10 is preferably set in a range from 0.20 to 0.30 times the tread width TW, for example.

The center position 10c in the tire axial direction of the crown land portion 10 is positioned on the second main groove (6) side of the tire equator C.

The distance L3 in the tire axial direction between the tire equator C and the center position 10c in the tire axial direction of the crown land portion 10 is preferably set in a range from 0.15 to 0.30 times the width W2 of the crown land portion 10.

The crown land portion 10 is provided with a plurality of narrow grooves 15.

Here, the narrow groove 15 means a groove having a groove width of not more than 3.0 mm at the ground contact surface of the land portion, and includes a so-called sipe.

In the present embodiment, the crown land portion 10 is not provided with a groove having a groove width of more than 3.0 mm at the ground contact surface thereof.

The narrow grooves 15 include a transverse narrow groove 16 traversing the crown land portion 10, and a plurality of non-transverse narrow grooves 17 extending from one of the main grooves and not crossing the crown land portion.

In the present invention, the crown land portion 10 is provided with a plurality of the transverse narrow grooves 16, and a plurality of the non-transverse narrow grooves 17.

The groove widths of the transverse narrow grooves 16 and the non-transverse narrow grooves 17 are not more than 3.0 mm at the ground contact surface of the crown land portion 10.

Air passing through each narrow groove has a small volume when contacting with the ground, and the occurrence of so-called pumping noise can be suppressed.

In addition, the transverse narrow grooves 16 cooperates with the non-transverse narrow grooves 17 to sufficiently reduce the rigidity of the crown land portion 10 and improve riding comfort.

On the other hand, since the non-transverse narrow grooves 17 do not cross the crown land portion 10 and the volume of air flowing in and out of them when contacting with the ground is small, the generation of pumping noise is less.

Therefore, in the tire according to the present invention, a significant decrease in the noise performance can be prevented.

The transverse narrow grooves 16 in this example are inclined with respect to the tire axial direction to a first direction (in Fig. 2, inclined downward to the right).

The angles of the transverse narrow grooves 16 with respect to the tire axial direction are, for example, set in a range from 10 to 30 degrees.

Further, the transverse narrow grooves 16 in the present embodiment are preferably curved slightly so that the angle with respect to the tire axial direction gradually increases toward the second tread edge Te2.

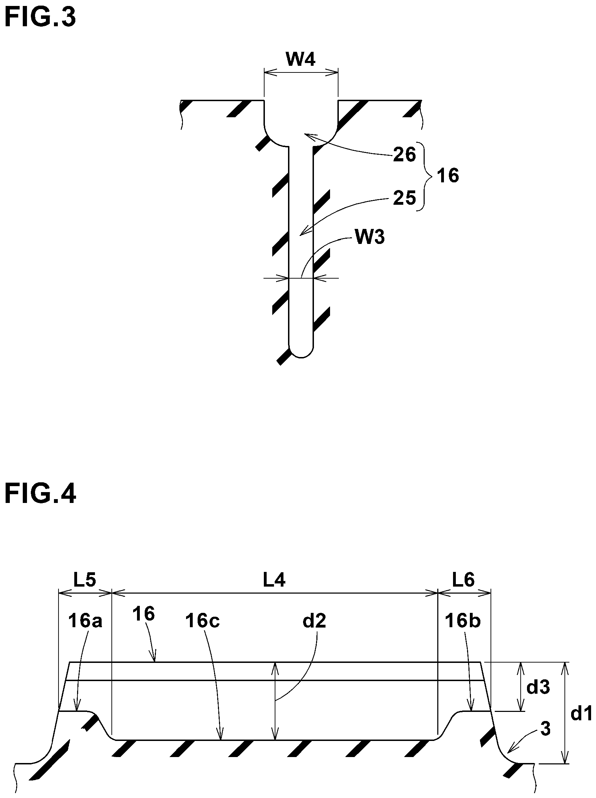

Fig. 3 is a cross-sectional view of the transverse narrow groove 16 taken along line A-A of Fig. 2. As shown in Fig. 3, in the cross section of the transverse narrow groove 16 perpendicular to the longitudinal direction of the transverse narrow groove 16, the transverse narrow groove 16 comprises a narrow portion 25 whose width W3 is not more than 1.5 mm, and a radially outer wide portion 26 whose width is larger than that of the narrower portion 25 and which extends radially outwardly from the narrow portion 25 to open at the ground contact surface of the land portion.

It is preferable that the width W4 of the wide portion 26 of the transverse narrow groove 16 measured at the ground contact surface is 1.8 to 2.5 mm, for example.

The radial dimension of the wide portion 26 is set in a range from 1.0 to 2.0 mm, for example.

The riding comfort is further improved by such transverse narrow grooves 16.

Fig. 4 is a cross-sectional view of the transverse narrow groove 16 taken along line B-B of Fig. 2.

As shown in Fig. 4, the transverse narrow groove 16 comprises a first shallow portion 16a, a second shallow portion 16b, and a deep portion 16c therebetween whose depth is greater than the first shallow portion 16a and the second shallow portion 16b.

In such transverse narrow groove 16, pumping sound therefrom is small. Thus, it is useful for suppressing deterioration of noise performance.

In the present embodiment, the deep portion 16c is disposed at such a position that the center in the tire axial direction of the transverse narrow groove 16 is included in the deep portion 16c.

The first shallow portion 16a is disposed on the first tread edge (Te1) side of the deep portion 16c, and the second shallow portion 16b is disposed on the second tread edge (Te2) side of the deep portion 16c although the tire according to the present invention is not to be limited to such arrangement.

The depth d2 of the deep portion 16c is set in a range from 0.60 to 1.00 times the depth d1 of the main groove 3, for example.

In the present embodiment, the depth d2 of the deep portion 16c is 0.65 to 0.85 times the depth d1 of the main groove 3.

The depths d3 of the first shallow portion 16a and the second shallow portion 16b are in a range from 0.30 to 0.50 times the depth d1 of the main groove 3, for example.

More preferably, the depths d3 of the first shallow portion 16a and the second shallow portion 16b are set in a range from 0.50 to 0.70 times the depth d2 of the deep portion 16c.

In the present embodiment, the depth of the first shallow portion 16a is the same as the depth of the second shallow portion 16b. Such transverse narrow grooves 16 can improve the riding comfort and noise performance in a well-balanced manner.

The length L4 of the deep portion 22c in the tire axial direction is set in a range from 0.60 to 0.90 times the width W2 in the tire axial direction (shown in Fig. 2) of the crown land portion 10, for example.

The length L5 of the first shallow portion 16a in the tire axial direction, and the length L6 of the second shallow portion 16b in the tire axial direction are smaller than the length L4 of the deep portion 16c in the tire axial direction.

Specifically, each of the length L5 and the length L6 is in a range from 0.05 to 0.20 times the width W2 of the crown land portion 10.

It is preferable that each of the non-transverse narrow grooves 17 provided in the crown land portion 10 is connected to one of the transverse narrow grooves 16 adjacent thereto in the tire circumferential direction as shown in Fig. 2.

The non-transverse narrow groove 17 comprises a first portion 31 inclined with respect to the tire axial direction to the above-said first direction, and a second portion 32 extending from the first portion 31 to the transverse narrow groove 16 while curving.

The first portion 31 extends along the transverse narrow groove 16, for example.

It is preferable that the first portion 31 extends parallel with the transverse narrow groove 16.

The second portion 32 is curved in an arc shape from the first portion 31 and connected to the transverse narrow groove 16.

In the non-transverse narrow groove 17, the first portion 31 crosses the center line 10c in the tire axial direction of the crown land portion 10.

Such non-transverse narrow grooves 17 help to reduce the rigidity of the crown land portion 10 and further enhance ride comfort.

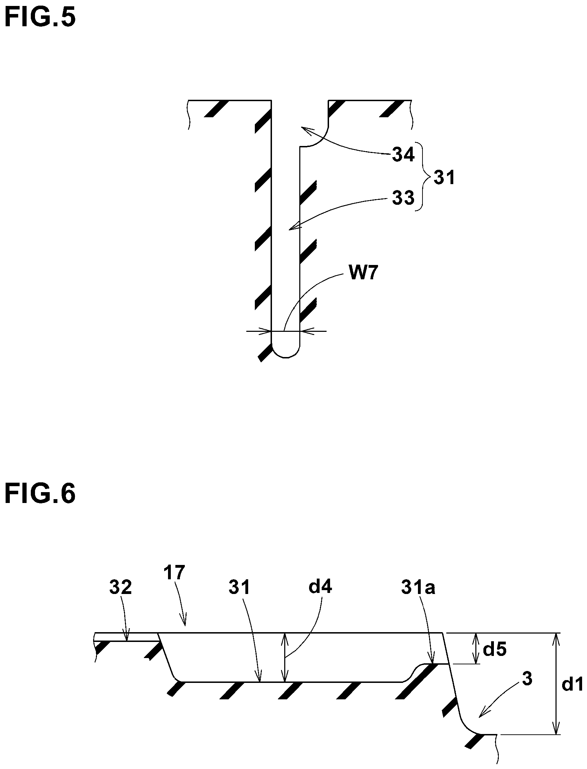

Fig. 5 is a cross-sectional view of the first portion 31 taken along the line C-C of Fig. 2.

As shown in Fig. 5, in the cross section of the first portion 31 perpendicular to the longitudinal direction of the first portion 31, the first portion 31 comprises
a narrow portion 33 whose width W7 is not more than 1.5 mm, and a radially outer wide portion 34 whose width is larger than the narrow portion 33 and which extends radially outwardly from the narrow portion 33 to open at the ground contact surface of the crown land portion 10.

In the first portion 31 in the present embodiment, one of the groove walls extends in parallel with the tire radial direction, and the other of the groove walls is bent in a direction so that the groove width of the first portion 31 is increased in the portion 34.

The non-transverse narrow grooves 17 having such first portion 31 can change the pumping sound into white noise in cooperation with the transverse narrow grooves 16, therefore, they are useful for improving noise performance.

Fig. 6 is a cross-sectional view of the first portion 31 taken along line D-D of Fig. 2. As shown in Fig. 6, the maximum depth d4 of the non-transverse narrow groove 17 (corresponding to the maximum depth of the first portion 31 in the present embodiment) is in a range from 0.80 to 1.00 times the maximum depth d2 (shown in Fig. 4) of the transverse narrow groove 16. Further, it is preferable that the first portion 31 is provided, at the end on the main groove (3) side, with a shallow portion 31a in which the groove bottom is raised.

In this example, the shallow portion 31a of the first portion 31 has substantially the same shape as the shallow portions 16a and 16b (shown in Fig. 4) of the transverse narrow groove 16, therefore, the structure of the above-described shallow portions 16a and 16b can be applied to the shallow portion 31a of the first portion 31.

The depth d5 of the shallow portion 31a of the first portion 31 is preferably set in a range from 0.30 to 0.50 times the depth d1 of the main groove 3.

Such first portion 31 helps to improve the riding comfort and the noise performance in a well-balanced manner.

The maximum depth of the second portion 32 is smaller than the maximum depth of the first portion 31, in this example. It is preferable that the maximum depth of the second portion 32 is smaller than the depth of the shallow portion 31a of the first portion 31.

In the present embodiment, the depth of the second portion 32 is the same as the radial dimension of the wide portion 34 (shown in Fig. 5) of the first portion 31.

As shown in Fig. 2, the non-transverse narrow grooves 17 in the present embodiment include a first non-transverse narrow groove 18 extending from the first main groove 5 to the transverse narrow groove 16, and a second non-transverse narrow groove 19 extending from the second main groove 6 to the same transverse narrow groove 16, for example.

The first non-transverse narrow groove 18 is adjacent to one side in the tire circumferential direction (upper side in Fig. 2) of the transverse narrow groove 16, whereas the second non-transverse narrow groove 19 is adjacent to the other side in the tire circumferential direction (lower side in Fig. 2) of the same transverse narrow groove 16.

Each of the first non-transverse narrow groove 18 and the second non-transverse narrow groove 19 preferably crosses the center line 10c in the tire axial direction of the crown land portion 10, and more preferably crosses the tire equator C. Such arrangement of the non-transverse narrow grooves 17 can alleviate the tapping sound when the crown land portion 10 (specifically groove edges) comes into contact with the ground and improve the noise performance.

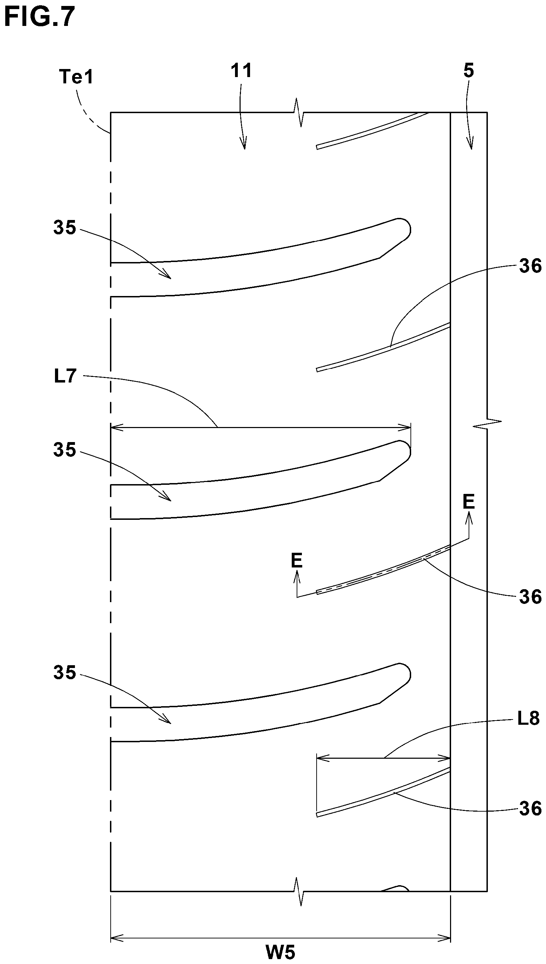

Fig. 7 shows an enlarged view of the first shoulder land portion 11.

It is preferable that the width W5 (shown in Fig. 7) in the tire axial direction of the first shoulder land portion 11 is larger than the width in the tire axial direction of the second shoulder land portion 12 as shown in Fig. 1.

In the present embodiment, the width in the tire axial direction of the ground contact surface of the first shoulder land portion 11 is the largest among the three land portions 10, 11 and 12. It is preferable that the width W5 in the tire axial direction of the first shoulder land portion 11 is in a range from 0.25 to 0.40 times the tread width TW.

Such first shoulder land portion 11 can make steering response linear when cornering, and thus can improve the steering stability.

The land ratio of the first shoulder land portion 11 is larger than the land ratio of the second shoulder land portion 12. Such first shoulder land portion 11 exhibits excellent wear resistance.

Here, the "land ratio" is a ratio of the area of the actual ground-contacting surface of a land portion to the overall area of the land portion assuming that all voids (inclusive of a groove and a sipe) are completely filled.

The rigidity of the first shoulder land portion 11 is relatively increased with the above-described configuration, and thus, the concentration of wear on the first shoulder land portion 11 can be suppressed.

On the other hand, during traveling straight, a relatively large load acts on the second shoulder land portion 12 located inward of the vehicle when the tire is mounted on the vehicle, due to the influence of the camber angle.

Since the land ratio of the second shoulder land portion 12 is relatively decreased, the rigidity of the second shoulder land portion 12 is reduced, and the riding comfort when traveling straight is effectively improved.

The land ratio of the first shoulder land portion 11 is preferably in a range from 1.1 to 2.0 times, more preferably 1.3 to 1.8 times the land ratio of the second shoulder land portion 12. Thereby, wear resistance and riding comfort are improved in a well-balanced manner.

The first shoulder land portion 11 is provided with a plurality of first shoulder lateral grooves 35 whose groove width is more than 3.0 mm at the ground contact surface, and a plurality of first shoulder narrow groove 36 whose groove width is not larger than 3.0 mm at the ground contact surface.

The first shoulder lateral grooves 35 in this example extend from the first tread edge Te1 and terminate within the first shoulder land portion 11.

The first shoulder lateral grooves 35 in this example crosses the center line in the tire axial direction of the first shoulder land portion 11.

The length L7 in the tire axial direction of the first shoulder lateral groove 35 is in a range from 0.75 to 0.90 times the width W5 in the tire axial direction of the first shoulder land portion 11, for example.

Such first shoulder lateral grooves 35 help to improve the riding comfort and noise performance in a well-balanced manner.

It is preferable that the first shoulder narrow groove 36 has a width of not more than 1.5 mm, for example, over its entire length and entire depth.

In the present embodiment, the first shoulder narrow groove 36 has a width of from 0.5 to 1.0 mm over its entire length and entire depth.

The first shoulder narrow groove 36 extends from the first main groove 5 and terminates within the first shoulder land portion 11, in this example.

The first shoulder narrow groove 36 terminates on the first main groove (5) side than the center position in the tire axial direction of the first shoulder land portion 11, in this example. The first shoulder narrow groove 36 terminates on the first tread edge (Te1) side than the inner end in the tire axial direction of the first shoulder lateral groove 35.

The length L8 in the tire axial direction of the first shoulder narrow groove 36 is in a range from 0.35 to 0.45 times the width W5 in the tire axial direction of the first shoulder land portion 11, for example.

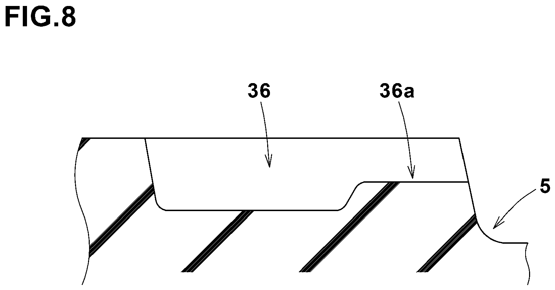

Fig. 8 is a cross-sectional view of the first shoulder narrow groove 36 taken along line E-E of Fig. 7.

It is preferable that the first shoulder narrow groove 36 is provided with a shallow portion 36a where, as shown in Fig. 8, the groove bottom is raised in such a region including an inner end in the tire axial direction of the first shoulder narrow groove 36. Such first shoulder narrow groove 36 is not excessively opened at the time of contacting with the ground, so steering stability and wear resistance are improved.

It is preferable that, as shown in Fig. 1, the first shoulder lateral grooves 35 and the first shoulder narrow grooves 36 are each inclined with respect to the tire axial direction to a second direction opposite to the above-said first direction of the transverse narrow grooves 16 (in Fig. 7, inclined upward to the right).

Further, it is preferable that the angle with respect to the tire axial direction of each of the first shoulder lateral groove 35 and the first shoulder narrow groove 36 is in a range from 5 to 20 degrees.

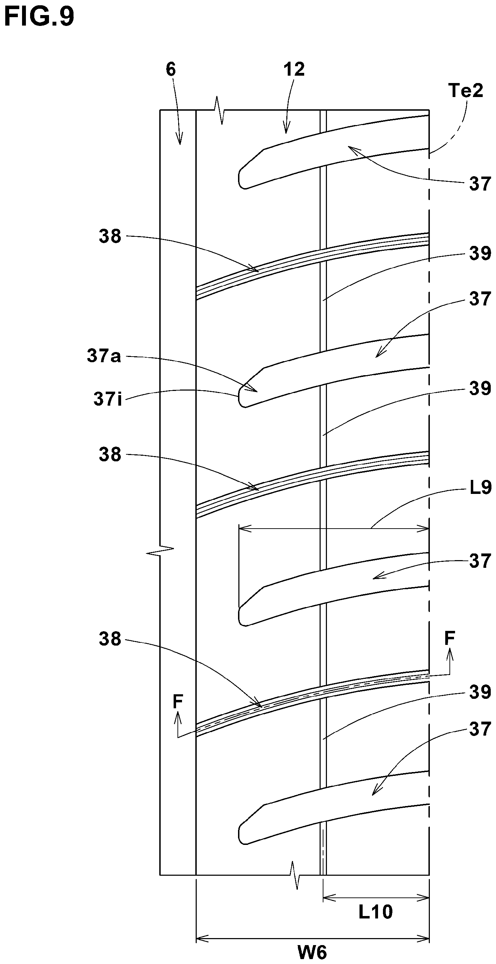

Fig. 9 is an enlarged view of the second shoulder land portion 12. As shown in Fig. 9, the width W6 in the tire axial direction of the second shoulder land portion 12 is not less than 0.10 times, preferably 0.20 to 0.30 times the tread width TW. Such second shoulder land portions 12 improve ride comfort and steering stability in a well-balanced manner.

The second shoulder land portion 12 is provided with a plurality of second shoulder lateral grooves 37 whose groove width at the ground contact surface is more than 3.0 mm, and a plurality of longitudinal narrow grooves 39 extending in the tire circumferential directions from the second shoulder lateral grooves 37.

The groove widths of the longitudinal narrow grooves 39 are not more than 3.0 mm at the ground contact surface.

Further, the second shoulder land portion 12 in the present embodiment is provided with a plurality of second shoulder narrow grooves 38 whose groove width is not more than 3.0 mm at the ground contact surface.

The second shoulder lateral groove 37 in this example extends from the second tread edge Te2 and terminates within the second shoulder land portion 12.

The length L9 in the tire axial direction of the second shoulder lateral groove 37 is not less than 0.50 times the width W6 in the tire axial direction of the second shoulder land portion 12, and more preferably 0.60 to 0.80 times the tread width TW, for example. Such second shoulder lateral grooves 37 can improve ride comfort while maintaining steering stability.

The second shoulder lateral groove 37 comprises a tapered portion 37a whose groove width gradually decreases toward its inner end 37i in the tire axial direction.

The depth of the tapered portion 37a gradually decreases toward the inner end 37i.

Such second shoulder lateral groove 37 can suppress uneven wear around the tapered portion 37a.

In the present embodiment, each of the longitudinal narrow grooves 39 extends from one to the other of every two of the second shoulder lateral grooves 37 adjacent to each other in the tire circumferential direction.

The groove depth of the longitudinal narrow groove 39 is, for example, 1.0 to 2.0 mm.

It is preferred that the distance L10 in the tire axial direction from the second tread edge Te2 to the groove center line of the longitudinal narrow groove 39 is set in a range from 0.40 to 0.60 times the width W6 in the tire axial direction of the second shoulder land portion 12, for example.

The second shoulder narrow groove 38 extends inward in the tire axial direction from the second tread edge Te2.

The second shoulder narrow groove 38 in this example intersects the longitudinal narrow groove 39.

It is preferable that the length in the tire axial direction of the second shoulder narrow groove 38 is larger than the length in the tire axial direction of the second shoulder lateral groove 37. The second shoulder narrow groove 38 in the present embodiment extends from the second tread edge Te2 to the second main groove 6.

Similarly to the cross-sectional shape of the transverse narrow groove 16 shown in Fig. 3, the second shoulder narrow groove 38 in this example comprises
a narrow portion 25 whose width is not more than 1.5 mm, and a radially outer wide portion 26 whose width is larger than that of the narrower portion 25 and which extends radially outwardly from the narrow portion 25 to open at the ground contact surface of the land portion.

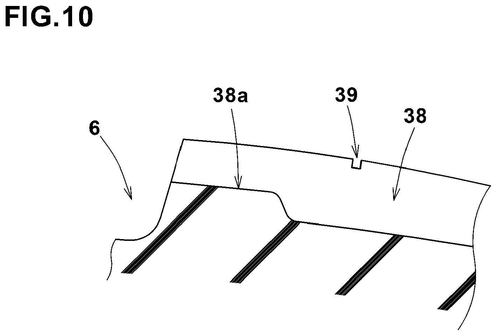

Fig. 10 is a cross-sectional view of the second shoulder narrow groove 38 taken along line F-F of Fig. 9. As shown in Fig. 10, the second shoulder narrow groove 38 comprises a shallow portion 38a where the groove bottom is raised on the second main groove (6) side than the vertical narrow groove 39. The shallow portion 38a in this example is provided at the end on the second main groove (6) side of the second shoulder narrow groove 38.

Such second shoulder narrow groove 38 helps to improve steering stability and ride comfort in a well-balanced manner.

As shown in Figs. 1 and 9, the second shoulder lateral groove 37 and the second shoulder narrow groove 38 are preferably inclined with respect to the tire axial direction to the above-said second direction.

It is preferable that the angle with respect to the tire axial direction of each of the second shoulder lateral groove 37 and the second shoulder narrow groove 38 is in a range from 5 to 20 degrees.

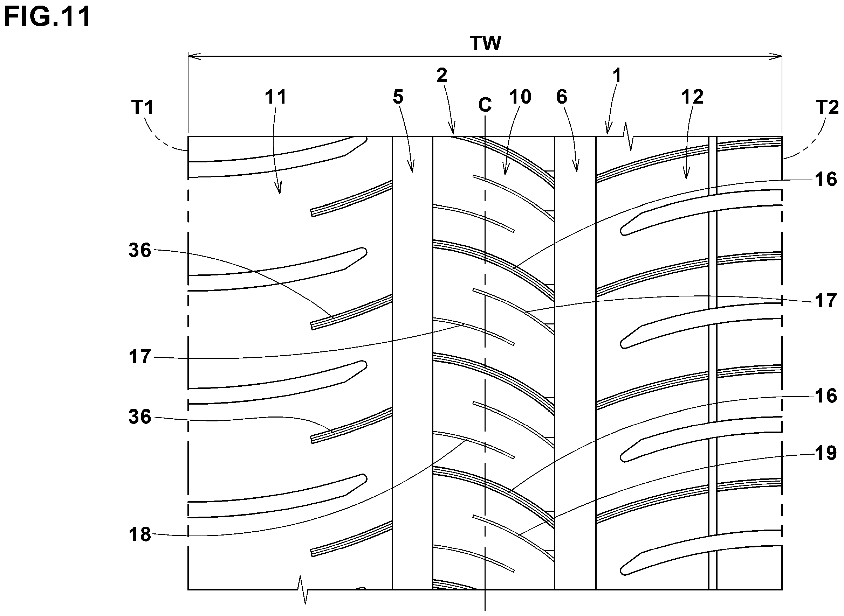

Fig. 11 is a developed view of a tread portion 2 of a tire 1 as another embodiment of the present invention.

In Fig. 11, the same elements as those described above are denoted by the same reference numerals, and redundant descriptions thereof will be omitted.

In this embodiment, the second portion 32 of the non-transverse narrow groove 17 is omitted.

Each of the non-transverse narrow grooves 17 has a width of not more than 1.5 mm over its entire depth and length.

Further, each of the first shoulder narrow grooves 36 is provided with the radially outer wide portion 26 shown in Fig. 3. Such embodiment can improve the wear resistance of the crown land portion 10 as compared with the embodiment shown in Fig. 1.

While detailed description has been made of preferable embodiments of the present invention, the present invention can be embodied in various forms without being limited to the illustrated embodiments without departing from the scope of the appended claims.

### Comparison tests

Based on the tread pattern shown in Fig. 1, pneumatic tires of size 195/65R15 were experimentally manufactured as test tires (including working examples Ex. 1 to Ex. 9 and comparative example Com.). Their specifications are listed in Table 1.

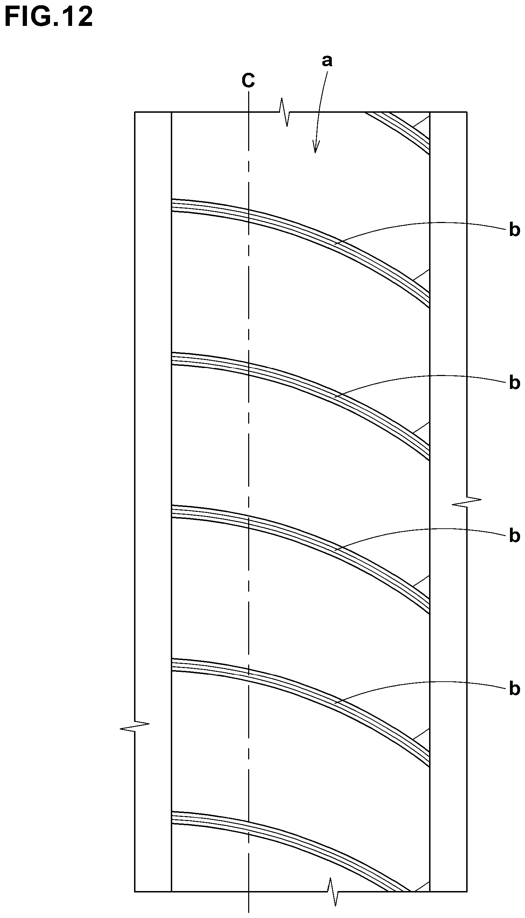

The comparative example Com. had a crown land portion (a) shown in Fig. 12. As shown, the crown land portion (a) was provided with transverse narrow grooves (b), but non-transverse narrow grooves were not provided. Except for this, the tread pattern of the comparative example was the same as that shown in Fig. 1.

The test tires mounted on wheel rims of size 15×6.0 and inflated to 200 kPa were attached to all wheels of a test car (a 2000cc front-wheel drive car).

Using the test car, the tires were tested for ride comfort and noise performance as follows.

### < Ride comfort test >

The ride comfort when traveling on a dry road surface with the above test car was evaluated sensuously by the test driver.

The results are indicated in Table 1 by a score based on the ride comfort of the comparative example being 100, wherein the larger the numerical value, the better the ride comfort.

### < Noise performance test >

The maximum sound pressure of noise when the test car traveled on a dry road at a speed of 40 to 100 km/h was measured. The results are indicated in Table 1 by an index based on the sound pressure of the comparative example being 100, wherein the smaller the numerical value is, the smaller the noise is, thus the more excellent the noise performance is.

**Table 1**

| Tire | Com. | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| crown land portion (Fig. No.) | 12 | 2 | 2 | 2 | 2 | 2 | 2 | 2 | 2 | 2 |
| depth d3/depth d1 | 0.47 | 0.47 | 0.3 | 0.4 | 0.5 | 0.6 | 0.47 | 0.47 | 0.47 | 0.47 |
| depth d5/depth d1 | -- | 0.47 | 0.47 | 0.47 | 0.47 | 0.47 | 0.3 | 0.4 | 0.5 | 0.6 |
| ride comfort | 100 | 100 | 98 | 99 | 101 | 103 | 99 | 100 | 100 | 103 |
| noise performance | 100 | 93 | 91 | 92 | 93 | 95 | 92 | 93 | 93 | 95 |

From the test results, it was confirmed that the working example tires Ex. 1 to Ex. 9 exhibited better noise performance than the comparative example although they exhibited comparable riding comfort performance to the comparative example.

Further comparison tests were conducted as follows.

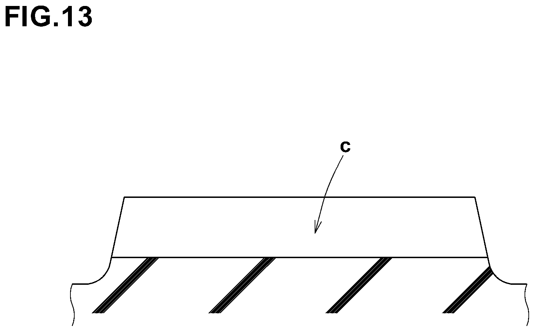

Based on the tread pattern shown in Fig. 1, pneumatic tires of size 195/65R15 were experimentally manufactured as test tires (including working examples Ex. 10 - Ex. 18 and reference example Ref. 1). Their specifications are listed in Table 2. The reference example Ref. 1 had transverse narrow grooves (c) having the cross section shown in Fig. 13, namely, having a flat groove bottom. Except for this, the tread pattern of Ref. 1 was the same as that shown in Fig. 1.

Using the test car to which the test tires were attached in the same manner as explained above, the test tires were tested for wear resistance and steering response at the initial stage of cornering as follows.

### < Wear resistance test >

The wear amount of the crown land portion after the test vehicle traveled for a certain distance on a dry road was measured.

The results are indicated in Table 2 by an index based on the wear amount of the reference example Ref. 1 being 100, wherein the smaller the value, the better the wear resistance.

### < Steering response at initial stage of cornering >

The steering response at the initial stage of cornering when the test car traveled on a dry road was evaluated sensuously by the test driver.

The results are indicated in Table 2 by a score based on the reference example Ref. 1 being 100, wherein the larger the value, the better the steering response at the initial stage of cornering.

**Table 2**

| Tire | Ref.1 | Ex.10 | Ex.11 | Ex.12 | Ex.13 | Ex.14 | Ex.15 | Ex.16 | Ex.17 | Ex.18 |
|---|---|---|---|---|---|---|---|---|---|---|
| cross section of transverse narrow groove (Fig. No.) | 13 | 4 | 4 | 4 | 4 | 4 | 4 | 4 | 4 | 4 |
| depth d2/depth d1 | -- | 0.75 | 0.65 | 0.7 | 0.8 | 0.85 | 0.75 | 0.75 | 0.75 | 0.75 |
| depth d3/depth d2 | -- | 0.63 | 0.63 | 0.63 | 0.63 | 0.63 | 0.5 | 0.55 | 0.65 | 0.7 |
| wear resistance | 100 | 95 | 94 | 94 | 96 | 97 | 94 | 94 | 95 | 95 |
| steering response | 100 | 104 | 102 | 103 | 105 | 105 | 102 | 103 | 104 | 103 |

From the test results, it was confirmed that the working example tires Ex. 10 to Ex. 18 exhibited excellent wear resistance and steering response.

Further comparison tests were conducted as follows.

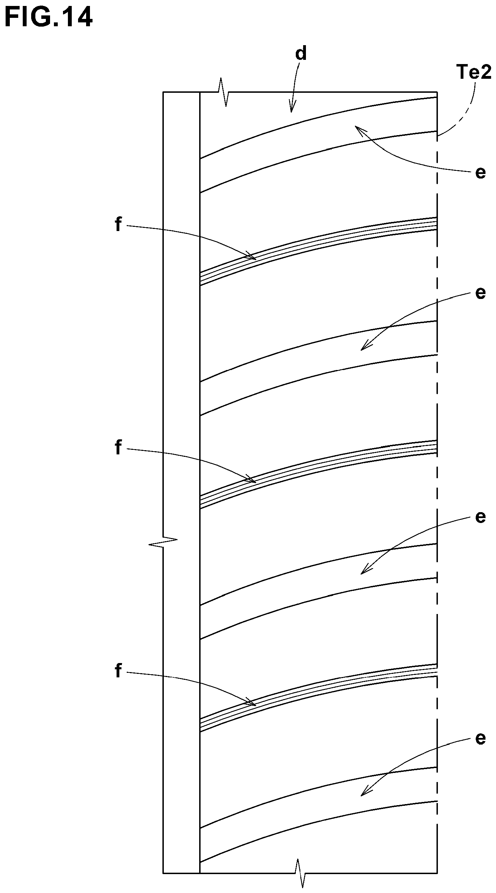

Based on the tread pattern shown in Fig. 1, pneumatic tires of size 195/65R15 were experimentally manufactured as test tires (including working examples Ex. 19 - Ex. 23 and reference example Ref. 2). Their specifications are listed in Table 3. The reference example Ref. 2 had the second shoulder land portion (d) shown in Fig. 14, wherein the lateral grooves (e) crossing the land portion and the second shoulder narrow grooves (f) were provided, but the longitudinal narrow grooves were not provided. Except for this, the tread pattern of Ref. 2 was the same as that shown in Fig. 1.

The test tires were tested for the wear resistance and ride comfort in the same manner as explained above.

The test results of the wear resistance test are indicated in Table 3 by an index based on the wear amount of the reference example Ref. 2 being 100.

The test results of the ride comfort test are indicated in Table 3 by an index based on the ride comfort of the reference example Ref. 2 being 100.

**Table 3**

| Tire | Ref.2 | Ex.19 | Ex.20 | Ex.21 | Ex.22 | Ex.23 |
|---|---|---|---|---|---|---|
| second shoulder land portion (Fig. No.) | 14 | 9 | 9 | 9 | 9 | 9 |
| depth d5/depth d1 | -- | 0.42 | 0.3 | 0.4 | 0.5 | 0.6 |
| wear resistance | 100 | 102 | 103 | 102 | 102 | 101 |
| ride comfort | 100 | 106 | 104 | 105 | 106 | 107 |

Form the test results, it was confirmed that the working examples Ex. 19 to Ex. 23 exhibited excellent wear resistance and ride comfort.

### Reference Signs List

- 2: tread portion
- 3: main groove
- 4: land portion
- 5: first main groove
- 6: second main groove
- 10: crown land portion
- 16: transverse narrow groove
- 17: non-transverse narrow groove
- Te1: first tread edge
- Te2: second tread edge

## Claims

1. A tire (1) comprising a tread portion (2) having a first tread edge (Te1) and a second tread edge (Te2), the tread portion (2) provided with two main grooves (3) extending continuously in the tire circumferential direction, wherein
the two main grooves (3) are a first main groove (5) disposed between the tire equator (C) and the first tread edge (Te1), and a second main groove (6),
**characterized in that** the second main groove (6) is disposed between the tire equator (C) and the second tread edge (Te2), **in that** the main grooves (3) axially divide the tread portion (2) into three land portions (4), wherein
the three land portions (4) include a crown land portion (10) between the first main groove (5) and the second main groove (6), wherein
the crown land portion (10) is provided with a plurality of transverse narrow grooves (16) crossing the crown land portion (10), and a plurality of non-transverse narrow grooves (17) each extending from one of the two main grooves (3) and not crossing the crown land portion (10), and **in that** the non-transverse narrow grooves (17) each comprise a first portion (31) extending from said one of the two main grooves (3) along the transverse narrow grooves (16), and a second portion (32) bent and extending from the first portion (31) and connected to one of the transverse narrow grooves (16).

2. The tire (1) according to claim 1, wherein
the groove width of each of the transverse narrow grooves (16) and the non-transverse narrow grooves (17) measured at a ground contact surface of the crown land portion (10) is not more than 3.0 mm.

3. The tire (1) according to claim 1 or 2, wherein
the first portion (31) includes a shallow portion (31a) where the groove bottom is raised in its end portion connected to said one of the two main grooves (3).

4. The tire (1) according to any one of claims 1 to 3, wherein
the transverse narrow grooves (16) each comprise a first shallow portion (16a), a second shallow portion (16b), and
a deep portion (16c) therebetween whose depth is greater than depths of the first shallow portion (16a) and the second shallow portion (16b).

5. The tire (1) according to any one of claims 1 to 4, wherein
the non-transverse narrow grooves (17) include first non-transverse narrow grooves (18) extending from the first main groove (5), and
second non-transverse narrow grooves (19) extending from the second main groove (6).

6. The tire (1) according to claim 5, wherein
the first non-transverse narrow grooves (18) are adjacent to the respective transverse narrow grooves (16) on their respective one sides in the tire circumferential direction, and
the second non-transverse narrow grooves (19) are adjacent to the respective transverse narrow grooves (16) on their respective other sides in the tire circumferential direction.

7. The tire (1) according to claim 5, wherein
the first non-transverse narrow grooves (18) are adjacent to the respective transverse narrow grooves (16) and connected thereto on their respective one sides in the tire circumferential direction, and
the second non-transverse narrow grooves (19) are adjacent to the respective transverse narrow grooves (16) and connected thereto on their respective other sides in the tire circumferential direction.

8. The tire (1) according to claim 7, wherein
each of the second non-transverse narrow grooves (19) comprises a first portion extending along the transverse narrow grooves (16), and a second portion bent and extending from the first portion and extending to the transverse narrow groove (16) to which the second non-transverse narrow groove is connected.

9. The tire (1) according to any one of claims 1 to 8, wherein
a position of the tire (1) when mounted on a vehicle is specified such that the first tread edge (Te1) is located outward of the vehicle and the second tread edge (Te2) is located inward of the vehicle,
the three land portions (4) include a first shoulder land portion (11) between the first tread edge (Te1) and the first main groove (5), and a second shoulder land portion (12) between the second tread edge (Te2) and the second main groove (6),
a land ratio of the first shoulder land portion (11) is larger than a land ratio of the second shoulder land portion (12), and
the second shoulder land portion (12) is provided with a plurality of second shoulder lateral grooves (37) extending from the second tread edge (Te2) and terminated within the second shoulder land portion (12), and
a plurality of longitudinal narrow grooves (39) extending in the tire circumferential direction and connected to the second shoulder lateral grooves (37).

10. The tire (1) according to claim 9, wherein
the width in the tire axial direction of the first shoulder land portion (11) is larger than the width in the tire axial direction of the second shoulder land portion (12).

11. The tire (1) according to claim 9 or 10, wherein
the longitudinal narrow grooves (39) are each connected to two of the second shoulder lateral grooves (37) which are adjacent to each other in the tire circumferential direction.

12. The tire (1) according to any one of claims 9 to 11, wherein
the second shoulder land portion (12) is provided with a plurality of second shoulder narrow grooves (38) extending from the second tread edge (Te2) to the second main groove (6).

13. The tire (1) according to claim 12, wherein
the second shoulder narrow grooves (38) intersect the respective longitudinal narrow grooves (39).

14. The tire (1) according to claim 13, wherein
each of the second shoulder narrow grooves (38) is provided with a shallow portion (38a) where the groove bottom is raised in its second main groove side than the longitudinal narrow grooves (39).

## Patentansprüche

1. Reifen (1), umfassend einen Laufflächenabschnitt (2) mit einer ersten Laufflächenkante (Te1) und einer zweiten Laufflächenkante (Te2), wobei der Laufflächenabschnitt (2) mit zwei Hauptrillen (3) versehen ist, die sich kontinuierlich in der Reifenumfangsrichtung erstrecken, wobei
die zwei Hauptrillen (3) eine erste Hauptrille (5), die zwischen dem Reifenäquator (C) und der ersten Laufflächenkante (Te1) angeordnet ist, und eine zweite Hauptrille (6) sind,
**dadurch gekennzeichnet, dass** die zweite Hauptrille (6) zwischen dem Reifenäquator (C) und der zweiten Laufflächenkante (Te2) angeordnet ist, dass die Hauptrillen (3) den Laufflächenabschnitt (2) axial in drei Landabschnitte (4) unterteilen, wobei
die drei Landabschnitte (4) einen Kronenlandabschnitt (10) zwischen der ersten Hauptrille (5) und der zweiten Hauptrille (6) umfassen, wobei
der Kronenlandabschnitt (10) mit einer Vielzahl von quer verlaufenden schmalen Rillen (16), die den Kronenlandabschnitt (10) kreuzen, und einer Vielzahl von nicht quer verlaufenden schmalen Rillen (17) versehen ist, die sich jeweils von einer der zwei Hauptrillen (3) aus erstrecken und den Kronenlandabschnitt (10) nicht kreuzen, und dass die nicht quer verlaufenden schmalen Rillen (17) jeweils einen ersten Abschnitt (31), der sich von der einen der zwei Hauptrillen (3) entlang der quer verlaufenden schmalen Rillen (16) erstreckt, und einen zweiten Abschnitt (32) umfassen, der gebogen ist und sich vom ersten Abschnitt (31) aus erstreckt und mit einer der quer verlaufenden schmalen Rillen (16) verbunden ist.

2. Reifen (1) nach Anspruch 1, wobei die Rillenbreite jeder der quer verlaufenden schmalen Rillen (16) und der nicht quer verlaufenden schmalen Rillen (17), gemessen an einer Bodenkontaktfläche des Kronenlandabschnitts (10), nicht mehr als 3,0 mm beträgt.

3. Reifen (1) nach Anspruch 1 oder 2, wobei der erste Abschnitt (31) einen flachen Abschnitt (31a) aufweist, in dem der Rillengrund in seinem mit der einen der zwei Hauptrillen (3) verbundenen Endabschnitt erhöht ist.

4. Reifen (1) nach einem der Ansprüche 1 bis 3, wobei die quer verlaufenden schmalen Rillen (16) jeweils umfassen
einen ersten flachen Abschnitt (16a), einen zweiten flachen Abschnitt (16b) und
einen tiefen Abschnitt (16c) dazwischen, dessen Tiefe größer ist als die Tiefen des ersten flachen Abschnitts (16a) und des zweiten flachen Abschnitts (16b).

5. Reifen (1) nach einem der Ansprüche 1 bis 4, wobei die nicht quer verlaufenden schmalen Rillen (17)
erste nicht quer verlaufende schmale Rillen (18), die sich von der ersten Hauptrille (5) erstrecken, und
zweite nicht quer verlaufende schmale Rillen (19), die sich von der zweiten Hauptrille (6) erstrecken, umfassen.

6. Reifen (1) nach Anspruch 5, wobei
die ersten nicht quer verlaufenden schmalen Rillen (18) benachbart zu den jeweiligen quer verlaufenden schmalen Rillen (16) auf ihren jeweiligen einen Seiten in der Reifenumfangsrichtung sind, und
die zweiten nicht quer verlaufenden schmalen Rillen (19) benachbart zu den jeweiligen quer verlaufenden schmalen Rillen (16) auf ihren jeweiligen anderen Seiten in der Reifenumfangsrichtung sind.

7. Reifen (1) nach Anspruch 5, wobei
die ersten nicht quer verlaufenden schmalen Rillen (18) benachbart zu den jeweiligen quer verlaufenden schmalen Rillen (16) sind und mit diesen auf ihren jeweiligen einen Seiten in der Reifenumfangsrichtung verbunden sind, und
die zweiten nicht quer verlaufenden schmalen Rillen (19) benachbart zu den jeweiligen quer verlaufenden schmalen Rillen (16) sind und mit diesen auf ihren jeweiligen anderen Seiten in der Reifenumfangsrichtung verbunden sind.

8. Reifen (1) nach Anspruch 7, wobei jede der zweiten nicht quer verlaufenden schmalen Rillen (19) einen ersten Abschnitt umfasst, der sich entlang der quer verlaufenden schmalen Rillen (16) erstreckt, und einen zweiten Abschnitt, der gebogen ist und sich von dem ersten Abschnitt aus erstreckt und sich zu der quer verlaufenden schmalen Rille (16) erstreckt, mit der die zweite nicht quer verlaufende schmale Rille verbunden ist.

9. Reifen (1) nach einem der Ansprüche 1 bis 8, wobei
eine Position des Reifens (1), wenn er an einem Fahrzeug montiert ist, so festgelegt ist, dass die erste Laufflächenkante (Te1) außen am Fahrzeug und die zweite Laufflächenkante (Te2) innen am Fahrzeug angeordnet ist,
die drei Landabschnitte (4) einen ersten Schulterlandabschnitt (11) zwischen der ersten Laufflächenkante (Te1) und der ersten Hauptrille (5) und einen zweiten Schulterlandabschnitt (12) zwischen der zweiten Laufflächenkante (Te2) und der zweiten Hauptrille (6) umfassen,
ein Landverhältnis des ersten Schulterlandabschnitts (11) größer ist als ein Landverhältnis des zweiten Schulterlandabschnitts (12), und
der zweite Schulterlandteil (12) versehen ist mit
einer Vielzahl von zweiten Schulterquerrillen (37), die sich von der zweiten Laufflächenkante (Te2) erstrecken und innerhalb des zweiten Schulterlandabschnitts (12) enden, und
einer Vielzahl von schmalen Längsrillen (39), die sich in der Reifenumfangsrichtung erstrecken und mit den zweiten Schulterquerrillen (37) verbunden sind.

10. Reifen (1) nach Anspruch 9, wobei die Breite in der axialen Richtung des Reifens des ersten Schulterlandabschnitts (11) größer ist als die Breite in der axialen Richtung des Reifens des zweiten Schulterlandabschnitts (12).

11. Reifen (1) nach Anspruch 9 oder 10, wobei die schmalen Längsrillen (39) jeweils mit zweien der zweiten Schulterquerrillen (37) verbunden sind, die in der Reifenumfangsrichtung benachbart sind.

12. Reifen (1) nach einem der Ansprüche 9 bis 11, wobei der zweite Schulterlandabschnitt (12) mit einer Vielzahl von zweiten schmalen Schulterrillen (38) versehen ist, die sich von der zweiten Laufflächenkante (Te2) zu der zweiten Hauptrille (6) erstrecken.

13. Reifen (1) nach Anspruch 12, wobei die zweiten schmalen Schulterrillen (38) die jeweiligen schmalen Längsrillen (39) kreuzen.

14. Reifen (1) nach Anspruch 13, wobei jede der zweiten schmalen Schulterrillen (38) mit einem flachen Abschnitt (38a) versehen ist, in dem der Rillengrund an seiner zweiten Hauptrillenseite gegenüber den schmalen Längsrillen (39) erhöht ist.

## Revendications

1. Pneumatique (1) comprenant une portion formant bande de roulement (2) ayant un premier bord de bande de roulement (Te1) et un second bord de bande de roulement (Te2), la portion formant bande de roulement (2) étant dotée de deux rainures principales (3) s'étendant en continu dans la direction circonférentielle du pneumatique, dans lequel les deux rainures principales (3) sont une première rainure principale (5) disposée entre l'équateur de pneumatique (C) et le premier bord de bande de roulement (Te1), et une seconde rainure principale (6),
**caractérisé en ce que** la seconde rainure principale (6) est disposée entre l'équateur de pneumatique (C) et le second bord de bande de roulement (Te2), **en ce que** les rainures principales (3) divisent axialement la portion formant bande de roulement (2) en trois portions en relief (4), dans lequel
les trois portions en relief (4) incluent une portion en relief de couronne (10) entre la première rainure principale (5) et la seconde rainure principale (6), dans lequel
la portion en relief de couronne (10) est dotée d'une pluralité de rainures étroites transversales (16) croisant la portion en relief de couronne (10), et d'une pluralité de rainures étroites non transversales (17) s'étendant chacune depuis l'une des deux rainures principales (3) et ne croisant pas la portion en relief de couronne (10), et
**en ce que** les rainures étroites non transversales (17) comprennent chacune une première portion (31) s'étendant depuis ladite une des deux rainures principales (3) le long des rainures étroites transversales (16), et une seconde portion (32) cintrée et s'étendant depuis la première portion (31) et connectée à l'une des rainures étroites transversales (16).

2. Pneumatique (1) selon la revendication 1, dans lequel la largeur de rainure de chacune des rainures étroites transversales (16) et des rainures étroites non transversales (17) mesurée au niveau d'une surface de contact au sol de la portion en relief de couronne (10) n'est pas supérieure à 3,0 mm.

3. Pneumatique (1) selon la revendication 1 ou 2, dans lequel la première portion (31) inclut une portion peu profonde (31a) où le fond de rainure est surélevé dans sa portion d'extrémité connectée à ladite une des deux rainures principales (3).

4. Pneumatique (1) selon l'une quelconque des revendications 1 à 3, dans lequel
les rainures étroites transversales (16) comprennent chacune une première portion peu profonde (16a), une seconde portion peu profonde (16b), et
une portion profonde (16c) entre celles-ci dont la profondeur est supérieure à des profondeurs de la première portion peu profonde (16a) et de la seconde portion peu profonde (16b).

5. Pneumatique (1) selon l'une quelconque des revendications 1 à 4, dans lequel
les rainures étroites non transversales (17) incluent
des premières rainures étroites non transversales (18) s'étendant depuis la première rainure principale (5), et
des secondes rainures étroites non transversales (19) s'étendant depuis la seconde rainure principale (6).

6. Pneumatique (1) selon la revendication 5, dans lequel
les premières rainures étroites non transversales (18) sont adjacentes aux rainures étroites transversales (16) respectives sur leurs côtés respectifs dans la direction circonférentielle du pneumatique, et
les secondes rainures étroites non transversales (19) sont adjacentes aux rainures étroites transversales (16) respectives sur leurs autres côtés respectifs dans la direction circonférentielle du pneumatique.

7. Pneumatique (1) selon la revendication 5, dans lequel les premières rainures étroites non transversales (18) sont adjacentes aux rainures étroites transversales (16) respectives et sont connectées à celles-ci sur leurs côtés respectifs dans la direction circonférentielle du pneumatique, et
les secondes rainures étroites non transversales (19) sont adjacentes aux rainures étroites transversales (16) respectives et connectées à celles-ci sur leurs autres côtés respectifs dans la direction circonférentielle du pneumatique.

8. Pneumatique (1) selon la revendication 7, dans lequel chacune des secondes rainures étroites non transversales (19) comprend une première portion s'étendant le long des rainures étroites transversales (16), et une seconde portion cintrée et s'étendant depuis la première portion et s'étendant jusqu'à la rainure étroite transversale (16) à laquelle la seconde rainure étroite non transversale et connectée.

9. Pneumatique (1) selon l'une quelconque des revendications 1 à 8, dans lequel
une position du pneumatique (1), quand il est monté sur un véhicule, est spécifiée de telle sorte que le premier bord de bande de roulement (Te1) est situé à l'extérieur du véhicule et que le second bord de bande de roulement (Te2) est situé à l'intérieur du véhicule,
les trois portions en relief (4) incluent une première portion en relief d'épaulement (11) entre le premier bord de bande de roulement (Te1) et la première rainure principale (5), et une seconde portion en relief d'épaulement (12) entre le second bord de bande de roulement (Te2) et la seconde rainure principale (6),
un rapport de relief de la première portion en relief d'épaulement (11) est plus grand qu'un rapport de relief de la seconde portion en relief d'épaulement (12), et
la seconde portion en relief d'épaulement (12) est dotée
d'une pluralité de secondes rainures latérales d'épaulement (37) s'étendant depuis le second bord de bande de roulement (Te2) et se terminant à l'intérieur de la seconde portion en relief d'épaulement (12), et
d'une pluralité de rainures étroites longitudinales (39) s'étendant dans la direction circonférentielle du pneumatique et connectées aux secondes rainures latérales d'épaulement (37).

10. Pneumatique (1) selon la revendication 9, dans lequel la largeur dans la direction axiale du pneumatique de la première portion en relief d'épaulement (11) est plus grande que la largeur dans la direction axiale du pneumatique de la seconde portion en relief d'épaulement (12).

11. Pneumatique (1) selon la revendication 9 ou 10, dans lequel les rainures étroites longitudinales (39) sont chacune connectées aux deux des secondes rainures latérales d'épaulement (37) qui sont adjacentes l'une à l'autre dans la direction circonférentielle du pneumatique.

12. Pneumatique (1) selon l'une quelconque des revendications 9 à 11, dans lequel
la seconde portion en relief d'épaulement (12) est dotée d'une pluralité de secondes rainures étroites d'épaulement (38) s'étendant depuis le second bord de bande de roulement (Te2) jusqu'à la seconde rainure principale (6).

13. Pneumatique (1) selon la revendication 12, dans lequel les secondes rainures étroites d'épaulement (38) recoupent les rainures étroites longitudinales (39) respectives.

14. Pneumatique (1) selon la revendication 13, dans lequel chacune des secondes rainures étroites d'épaulement (38) est dotée d'une portion peu profonde (38a) où le fond de rainure est surélevé dans le côté de sa seconde rainure principale par rapport aux rainures étroites longitudinales (39).
